# EUROPEAN PATENT SPECIFICATION

(11) **EP 2 956 817 B1**
(45) Date of publication and mention of the grant of the patent: **25.07.2018**
(21) Application number: 14751997.9
(22) Date of filing: 13.02.2014
(51) Int. Cl.: G02C 7/04, G02C 7/02

(54) **CONTACT LENS STABILISATION**
KONTAKTLINSENSTABILISIERUNG
STABILISATION DE LENTILLE DE CONTACT

(30) Priority: 13.02.2013 AU 2013200761
(43) Date of publication of application: 23.12.2015
(73) Proprietor: Brien Holden Vision Institute, Sydney, NSW 2052 (AU)
(72) Inventor: EHRMANN, Klaus, Sydney, New South Wales 2052 (AU); HOLDEN, Brien Anthony, Sydney, New South Wales 2052 (AU)
(74) Representative: Holzwarth-Rochford, Andreas
(86) International application number: PCT/AU2014/000122
(87) International publication number: WO 2014/124493

(56) References cited:
- WO-A1-01/75509
- WO-A1-2006/089709
- US-A- 4 854 089
- US-A1- 2002 021 410
- US-A1- 2005 041 202
- US-A1- 2005 068 489

## Description

### Field

The field of this disclosure relates to contact lenses and methods of design and manufacture of contact lenses. More particularly, this disclosure relates to contact lenses comprising a stabilisation mechanism.

### Background

Certain contact lens designs require rotational stabilisation. An example is a toric contact lens designed to correct astigmatism in a recipient eye.

A method of stabilisation is to provide a wedge-shaped thickness profile within a peripheral area of the contact lens. The peripheral area of a lens is the area outside of a central optical zone in which optical correction is applied. In some existing lens designs the vertical wedge profile is symmetric around a horizontal meridian, with the lens thinning inferiorly and superiorly from a central horizontal meridian. In other existing lens designs the wedge profile is provided in the form of a prism ballast, where the thickness increases inferiorly.

There is continued demand for contact lenses with a stabilization mechanism and accordingly ongoing interest in improved or useful alternative stabilization mechanisms.

The following patent applications refer to previous solutions to the problem of contact lens stabilization that are to be considered as relevant documents of the prior art: US2005/0068489A1 and US2005/0041202A1. Reference to any prior art in the specification is not, and should not be taken as, an acknowledgment or any form of suggestion that this prior art forms part of the common general knowledge in any jurisdiction or that this prior art could reasonably be expected to be ascertained, understood and regarded as relevant by a person skilled in the art.

### Summary

Embodiments of contact lenses with rotational stabilisation mechanisms are disclosed. The contact lens of the invention comprises an anterior surface, a posterior surface and an edge joining the anterior surface and posterior surface. The anterior and posterior surface forms a central optic zone and a peripheral zone outside the central optic zone. The peripheral zone may have a thickness profile with a varying thickness for providing rotational force to tend to rotationally orient the contact lens in a target orientation (the rotational stabilisation mechanism). The thickness profile may have substantially curvilinear lines of constant thickness (or at least substantially constant thickness) that, when the lens is in the target orientation, extend generally horizontally across the lens.

In certain embodiments the substantially curvilinear lines of constant thickness (or at least substantially constant thickness) may substantially match the contact lines of the margins of at least one of the eyelids of a recipient, or a population, sub-population or group average.

In certain embodiments the contact lens may further comprise an outer peripheral zone extending between the peripheral zone and the edge. The outer peripheral zone may have a thickness profile that smoothly transitions between the outer extremity of the peripheral zone and the edge. In the contact lens of the invention the lines of constant thickness (or at least substantially constant thickness) are located substantially along the intersection of a plane at different angles of rotation and the anterior and/or posterior surface of the contact lens, the plane having a fixed axis of rotation posterior to the lens.

In certain embodiments the contact lens may have particular application where the optic zone includes rotationally asymmetrical optics, for example, where the central optic zone includes optics for correction of astigmatism. The invention also comprises a method of manufacturing of the contact lens according to claim 9. In certain embodiments, the contact lens may comprise, an outer peripheral zone about the peripheral zone, the outer peripheral zone extending to the edge, wherein the method includes forming the outer peripheral zone to have a thickness profile that provides a smooth transition (or at least a substantially smooth transition) in thickness between the outer extremity of the peripheral zone and the edge.

Further aspects of the embodiments described herein will become apparent from the following description, given by way of example and with reference to the accompanying drawings.

### Brief description of the drawings

Figure 1A is a diagrammatic representation (not to scale) of a front, orthographic projection of an embodiment of a contact lens comprising a prism ballast type rotational stabilisation mechanism.
Figure 1B shows an embodiment of a thickness profile through the vertical centre of the contact lens in Figure 1A.
Figure 2A is a diagrammatic representation (not to scale) of a front, orthographic projection of an embodiment of a contact lens comprising a double slab-off ballast type rotational stabilisation mechanism.
Figure 2B shows an embodiment of a thickness profile through the vertical centre of the contact lens in Figure 2A.
Figure 3 shows a side, orthographic projection of the contact lens and illustrates an embodiment of a method to identify a thickness profile for the contact lens.
Figure 4 shows a side, orthographic projection of an embodiment of the lens a contact lens including a prism ballast type rotational stabilisation mechanism.
Figure 5A is a diagrammatic representation (not to scale) of a front, orthographic projection of an embodiment of a contact lens with a combination of linear and curvilinear lines of substantially constant thickness.
Figure 5B is a diagrammatic representation (not to scale) of a front, orthographic projection of an embodiment of a contact lens with some of the lines of substantially constant thickness in piecemeal form.

### Detailed description of the embodiments

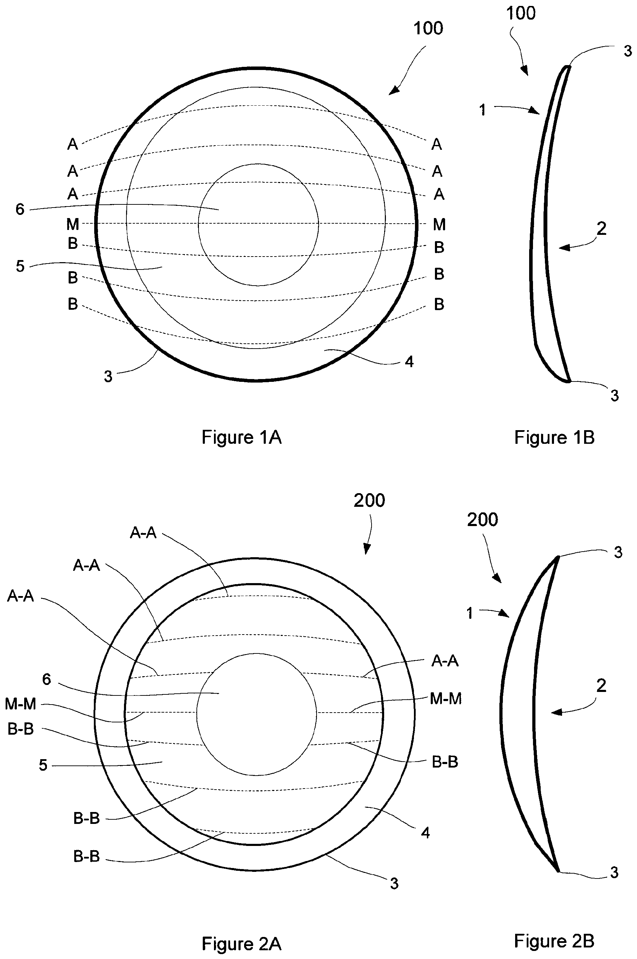

Exemplary embodiments are described below with reference to the accompanying figures. For aid of explanation, a frame of reference is defined for Figures 1 and 2 in relation to a person wearing the depicted contact lenses, standing erect and looking straight ahead, whereby the direction out of the page represents the anterior direction and the direction towards the top of the page represents vertically up. The contact lenses are shown in Figures 1 and 2 in their desired orientation.

Certain embodiments described herein relate to a rotational stabilisation mechanism for a contact lens. In certain embodiments, an objective of the rotational stabilisation mechanism may be to provide a rotational force that tends to orient the lens in a particular orientation when fitted onto the eye of a recipient. The stabilisation mechanism may be formed as a thickness profile of the contact lens, which varies in the vertical direction so that, when the lens is in the target orientation, the thickness profile results in an even (or substantially even) spread of the pressure over a relatively large area along the lid margin (or in close proximity to the lid margin).

To achieve the even spread of pressure, the contact lens is manufactured with a curvilinear horizontal thickness profile. The curvilinear thickness profile may more closely resemble the contact lines of the margins of the eyelids of the recipient than a linear horizontal thickness profile. The shape of the margins of the eye-lids may be defined with reference to the eye-lids at rest in an open position, with reference to the eye-lids in motion during blinking, or with reference to both the eye-lids at rest and in motion. For example, in certain embodiments the upper and/or lower regions of the lens may have a curvilinear horizontal thickness profile approximating the eye-lid at rest and the more central regions may have a curvilinear horizontal thickness profile approximating the eye-lid shape during blinking, when passing the central region of the lens. The lens shape may transition between the curvilinear horizontal thickness profiles, for example by gradually reducing the extent of curvature if the relevant eye-lid shape flattens during blinking. The curvilinear thickness profile is formed by providing substantially constant lens thickness along lines of intersection between a horizontal plane at different angles of rotation and a surface of the contact lens, the plane having a fixed axis of rotation posterior to the lens. In other words, the thickness is relatively constant along lines that define constant angular distance from a central horizontal meridian of the lens, where the point of determination of the angular distance (the axis of rotation) is posterior to the contact lens. The axis of rotation may be selected to approximate an axis of rotation defined for the upper eyelid of the recipient. The recipient may be a specific individual, or a notional recipient, for example, defined by data from a population, sub-population or other specified group of recipients and the axis of rotation and/or other parameters used to define the curvilinear thickness profile selected with reference to this data.

Figure 1 shows a diagrammatic representation of an embodiment of a contact lens 100 having a thickness profile as described herein. Figure 1A shows a view of the anterior side of the contact lens 100 and Figure 1B shows a cross-section through the vertical centre of the contact lens 100. The contact lens 100 may be a hard contact lens (e.g. rigid gas permeable RGP), a soft contact lens (e.g. hydrogel or silicone hydrogel), or a combination lens formed of hard and soft materials (e.g. hard materials centrally, moulded in a soft peripheral shell).

The contact lens comprises a convex anterior surface 1, a concave posterior surface 2 and an edge 3 joining the anterior and posterior surfaces 1, 2. Within the edge 3 different zones may be provided, which generally perform different functions. In certain embodiments three zones may be provided, an outer peripheral zone 4, an inner peripheral zone 5 and a central optic zone 6. The central optic zone 6 may have any suitable dimensions. For example, the central optic zone 6 may have a diameter between about 3 mm and about 8 mm. The inner peripheral zone 5 may extend out to a diameter of up to approximately 15 mm, provided that where the curvilinear horizontal thickness profile described herein is provided in the inner peripheral zone 5, it is larger in dimension than the central optic zone 6 by a sufficient amount to provide effective rotational force to orient the lens, at least during use on a recipient when standing erect and looking straight ahead. If provided, an outer peripheral zone 4 may be provided outside of the inner peripheral zone 5 and extend the dimension of the lens by between about 0.5 mm to about 2 mm.

The outer peripheral zone 4 may provide a smooth transition between the edge 3 and the inner peripheral zone 5 and may allow for the contact lens to have a uniform edge thickness. As best seen from Figure 1B, the contact lens shown in Figure 1 is a prism ballast type lens, which has increasing thickness towards the bottom of the lens to provide rotational stabilisation. As shown in the embodiment in Figure 1 the outer peripheral zone 4 may be wider at the bottom of the lens than at the top. In certain embodiments, this may provide a larger transition distance between the relatively thicker bottom of the inner peripheral zone 5 and the peripheral 3. In certain embodiments, the outer extremity of the outer peripheral zone 4 may be curved to create a smooth edge 3, which may improve comfort/reduce irritation.

In certain embodiments, the inner peripheral zone 5 may assist with locating the lens on the eye. As described in more detail below, in certain embodiments, it is this zone that provides the predominant rotational stabilisation forces. The thickness of the contact lens 100 in this zone varies in line with the requirements for the rotational stabilisation mechanism. Generally the thickness of the lens in this zone may vary between 0.08 mm to 0.4 mm (e.g., between 0.08 mm to 0.2 mm, between 0.08 mm to 0.3 mm, between 0.1 mm to 0.2 mm, between 0.1 mm to 0.3 mm, between 0.1 mm to 0.4 mm, between 0.15 mm to 0.25 mm, between 0.15 mm to 0.3 mm, between 0.15 mm to 0.35 mm, or between 0.15 mm to 0.4 mm. In certain embodiments, the thickness of the inner peripheral zone may vary by about 0.1mm, 0.15 mm, 0.2 mm, 0.25 mm, 0.3mm, 0.35 mm, or 0.4 mm. To avoid discontinuity, which may cause irritation or discomfort, the thickness of the outer extremity of the inner peripheral zone 5 and the inner extremity of the outer peripheral zone 6 along any given half meridian may be equal, and the lens design process may be constrained to create this equality of thickness at the transition between these zones. Alternatively, in certain embodiments, a smooth transition zone may be defined between the zones, for example a transition zone of radial width within a range between about 0.2 mm to about 0.5 mm. The same approach may be taken for the transition between the inner peripheral zone 5 and the central optic zone 6.

The central optic zone 6 provides vision correction optics. The vision correction optics may vary widely between embodiments described herein, depending on the requirements for the recipient. For example the vision correction optics may correct any combination of myopia, hyperopia, astigmatism, coma and/or provide a multifocal lens for presbyopia or provide stimulus for addressing myopia progression. The stabilisation mechanisms may have particular utility when the vision correction optics are rotationally asymmetrical. For example, prism ballasted lenses can be of the 'prism free optic' type or may have a prismatic optic zone. The former may have a vertical thickness profile through the central optic zone 6 which is essentially parallel, while the latter has a thickness profile that increases towards the inferior to roughly match that of the inner peripheral zone 5.

While the central optic zone 6 is shown as circular or disc-shaped in Figures 1 and 2, the shape may vary for either or both of the anterior and posterior surfaces. For example, for a toric contact lens the front optic zone, which contains the spherical power may be circular, but the back optic zone with the cylinder power may be oval in shape.

As described above, a typical situation in which a contact lens may benefit from a stabilisation mechanism is when the vision correction optics are more effective in a particular orientation. A common scenario where this may occur is a toric lens for correcting astigmatism. Also as described herein, the particular orientation for the example lens shown in Figure 1 is as shown on the page (i.e. assuming that vertically up for the wearer aligns with the direction towards the top of the page).

Referring specifically to Figure 1A, the dashed generally horizontal lines represent lines of constant thickness (or at least substantially constant thickness). Apart from along the central horizontal meridian, which is marked M-M, the lines of constant thickness are curvilinear. The curvilinear lines of constant thickness for the upper hemisphere of the lens are marked A-A and the curvilinear lines of constant thickness for the lower hemisphere of the lens are marked B-B. The lines A-A and B-B may represent a different thickness, although it will be appreciated that in certain embodiments some or all of lines A-A may have a corresponding line B-B of the same thickness (or substantially the same thickness). The curvilinear lines more closely match the profile of the margins of the eyelids of a human wearer on the anterior surface 1 of the contact lens 100 in comparison to if the lines of constant thickness were linear. Due to the closer matching profile, the pressure between the eyelids and the lens may be more widely distributed, particularly when the lens is in the desired orientation or close to the desired orientation. As will be appreciated from examples described herein, the dashed generally horizontal lines represent the general thickness profile of the lens and embodiments will have lines of constant thickness that vary in shape from those shown, while still being formed or characterised by curved lines.

In Figure 1A the lines of constant thickness A-A, B-B and M-M are extended beyond the inner peripheral zone 5 so as to also pass through the outer peripheral zone 4 and the central optic zone 6. However, this is to better illustrate the curvilinear shape of the lines A-A and B-B. In certain embodiments, within the outer peripheral zone 4 and the central optic zone 6 the thickness of the lens may not be constant along the lines A-A, B-B and M-M. Instead, the thickness may vary, in the case of the outer peripheral zone 4 to transition between the inner peripheral zone 5 and edge 3 and in the case of the central optic zone 4 according to the required refractive properties of this zone. In other words, in certain embodiments, the lines of constant thickness may only apply to the inner peripheral zone 5. Figure 2 discussed herein illustrates dashed lines representing constant thickness included in inner peripheral zone, but not in the central optic zone 6 or the outer peripheral zone 4.

Figure 2 shows a contact lens 200 according to certain embodiments. The contact lens 200 is a double slab-off type contact lens, in which the lens thickness reduces away from the central meridian towards the top and bottom of the lens. The contact lens 200 includes an edge 3, outer peripheral zone 4, inner peripheral zone 5 and central optic zone 6. These zones may be similar to and perform the functions of the zones described herein for the contact lens 100. Accordingly a detailed description of the zones is not repeated and like reference numerals are used in Figures 1 and 2 to represent like features.

The embodiment of double slab-off type contact lens shown in Figure 2 has a substantially symmetrical thickness profile across the horizontal central meridian. Accordingly, the outer peripheral zone 4 has a substantially constant width around the contact lens 200 and the inner peripheral zone is substantially centred on the contact lens 200. Certain embodiments may be asymmetrical, for example to provide a combination of a double slab-off type contact lens with some prism ballast.

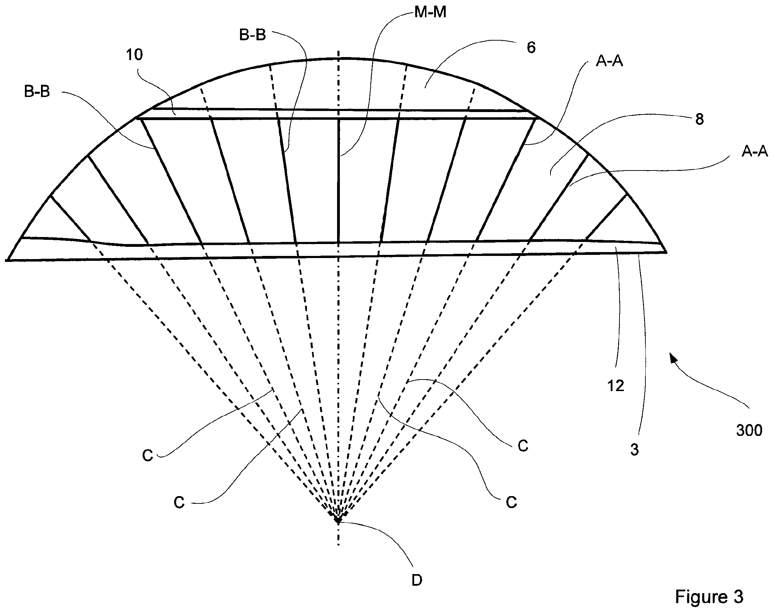

Figure 3 shows an embodiment of a method of identification of the substantially constant thickness curvilinear lines A-A and B-B shown in Figure 1. The same method of identification may be used for the contact lens shown in Figure 2.

Figure 3 shows a cross-sectional and topographical view of an embodiment of a contact lens 300. The contact lens 300 may be of the type shown in Figure 1, including a prism ballast type rotational stabilisation mechanism. As illustrated, the contact lens 300 has an edge 3, and a peripheral zone 8 outside a central optic zone 6. Between the central optic zone 6 and the peripheral zone 8 is a substantially smooth first transition zone 10 to blend between the central optic zone 6 and peripheral zone 8. Similarly, a second transition zone 12 is provided between the peripheral zone 8 and the edge 3 to blend between the peripheral zone and the edge. The lines of substantially constant thickness (e.g. lines A-A and B-B from Figure 1) are formed by the intersection of a plane C with the contact lens 300, the plane located at different angular positions about an axis of rotation D. As can be seen from Figure 3, the thickness profile of the lenses of embodiments of the present invention varies from lenses in which the thickness profile is substantially constant horizontally (in which case the planes C would be parallel to each other). In one embodiment the axis of rotation D is fixed, as an approximation of an axis about which the eyelids rotate when opening and closing. The eyeball is not a perfect sphere and the eyelids are a soft tissue with considerable compliance, stretching and deforming with every blink. Accordingly, in certain embodiments a more accurate approximation may be achieved by allowing the axis of rotation D to move around with the blinking motion in anterior-posterior and superior-inferior direction. For example, the curvature at different eyeline positions of a recipient/recipient group may be measured and the axis of rotation D adjusted to provide an acceptable fit, for example using a best fit analysis technique as through a determination to minimise the sum of the squared distances between an eye-lid shape and the lines of substantially constant thickness. It will be appreciated that various alternative fit techniques for a recipient or recipient group may be employed to create the curvilinear lines and that instead a lens may be manufactured using actual measurements of the lid margins and their movements, varying from this according to the accuracy with which the lenses can be manufactured. The axis of rotation may generally be located between about 5 to 14 mm (e.g., 5 mm, 6 mm, 7 mm, 8 mm, 9 mm, 10 mm, 11 mm, 12 mm, 13 mm, 14 mm, although it will be appreciated that location of the axis of rotation is not constrained to integer intervals) posterior to the contact lens.

In certain embodiments the definition of the thickness profile may therefore be defined by a combination of the total required thickness variation across the peripheral zone 8 and the curvilinear lines A-A and B-B. In certain embodiments, the thickness may increase substantially linearly in the vertical direction. In certain embodiments the rate of thickness increase may change, for example to provide a relatively thicker base of the contact lens. The curvilinear lines may be defined by the intersection of a plane with the surface of the contact lens as described above with reference to Figure 3, or may be defined by other techniques, which result in an increase in the area over which pressure is achieved relative to lenses with a constant lines of thickness that are linear. For example, in other embodiments the location of the axis of rotation of the planes C may not be fixed. In certain embodiments the location of the axis of rotation may differ between the lines of constant thickness above the horizontal central meridian and the lines of constant thickness below the horizontal central meridian. In this embodiment, the location of the axis of rotation may be selected with regard to differences in profile between the upper and lower eyelids, either of a specific recipient or as an average of a population, sub-population or other group. In certain embodiments, the curvilinear lines may be defined having regard to measurements of the actual eye-lid boundaries, which may be captured, for example, by taking a video of the eye lids closing, optionally when wearing a reference contact lens to make the location of the eye surface similar to that when a contact lens designed in accordance with the present invention is located on the eye. The video may then be analysed to identify the shape of the eye-lid boundary at a plurality of different positions during blinking and defining the lines of constant thickness as matching that boundary. The reference contact lens may also include a ballast of the type intended to be included in the lens with curvilinear lines of constant thickness, so as to provide an approximate reference for the location on the cornea where the lens will likely sit when applied.

In certain embodiments once the definition of the thickness profile is determined and the shape requirements arising out of the refractive properties for the optic zone 6 are determined or received, then the lens may be manufactured using conventional techniques. These include machine lathing and double or single sided moulding. The curvilinear lines of constant thickness described above may include some variation, for example due to manufacturing tolerances or other factors, but generally the lines more closely match the contact lines of the margins of one or both of the eyelids of the recipient with the contact lens in comparison to horizontal linear lines across the same part of the lens.

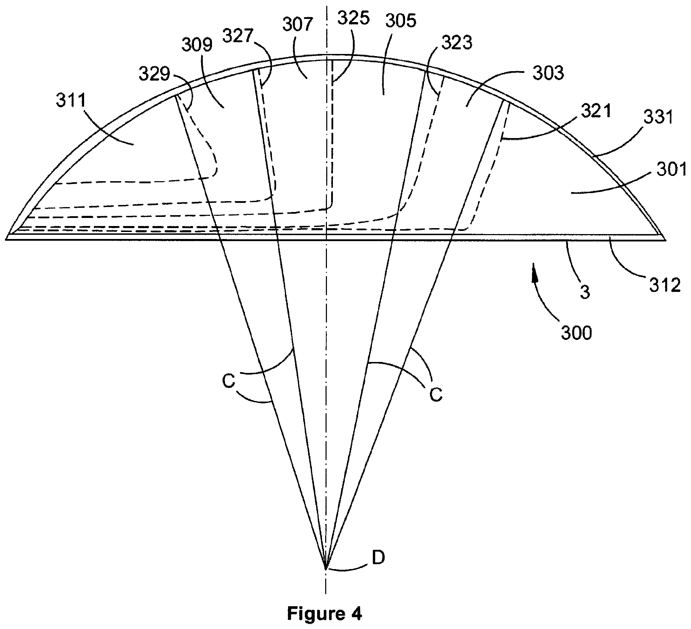

Figure 4 illustrates an embodiment of the method described herein with reference to Figure 3. The lens 300 comprises areas with differing and varying thickness, including thinner areas 301, 303, central intermediate thickness areas 305, 307 and thicker areas 309, 311. Similar to the embodiment shown in Figure 3, the lens 300 in Figure 4 has an edge 3, and a transition zone 312 between the peripheral zone and the edge 3.

The thickness profile is illustrated by the contour lines 321, 323, 325, 327, 329. As noted above, there is a general change from thinnest to thickest vertically across the lens (referring to the target orientation). In certain embodiments there is also a general reduction in thickness of the lens in the posterior part of the lens, approaching the edge 3, as shown by the knee in the contour lines 321, 323, 325, 327. In some embodiments, the lens may have substantially the same thickness at the boundary to the transition zone 312, which may for example enhance comfort to the wearer. As shown in the specific embodiment of Figure 4, this thickness may be substantially equal to a thickness provided in the thinnest region of the lens.

The thickness of the lens 300 in each of the areas 301, 303, 305, 307, 309, 311 is not constant throughout each area, but include gradual and smooth transitions with adjacent areas. Thus each of the individual areas 301, 303, 305, 307, 309, 311 do not indicate a specific thickness, but instead a range of thicknesses. The cross-sectional thickness of the lens 300 is further illustrated by the cross-section 331, which is thickest about the thickest area 311, and thinnest about the thinnest area 301.

In certain embodiments, the contour lines, which at least in part include the curvilinear lines of substantially constant thickness, may deviate from the planes C to some extent, while retaining their overall characterisation of curvilinear lines. This is illustrated for example, by contour lines 321 and 329, in Figure 4. As illustrated, there may be variances between the general angle of the contour lines and that of plane C.

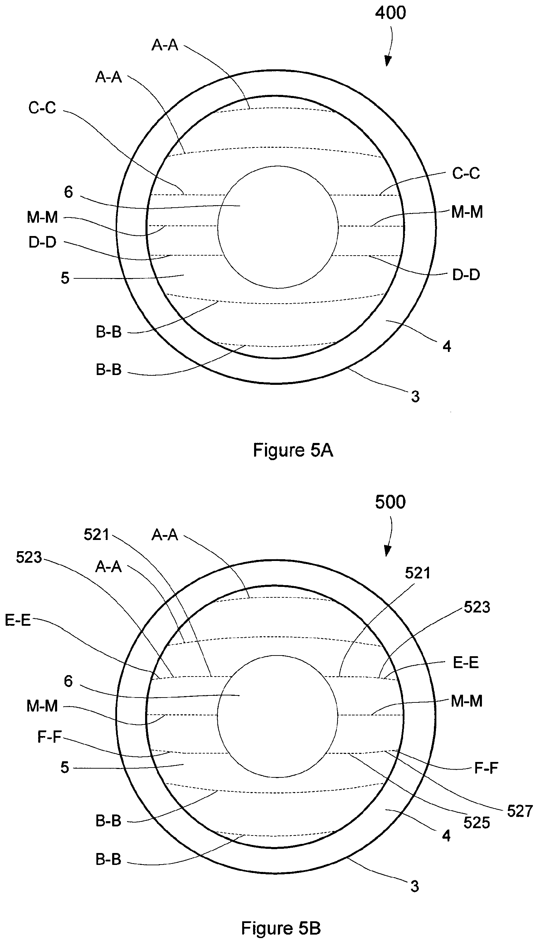

Further embodiments are illustrated in Figures 5A and 5B. These embodiments include some of the features in the embodiment shown in Figure 2 and like features include the same reference numerals.

Referring to Figure 5A, a difference is the lines of constant thickness around the central region. As shown in Figure 5A, in addition to the substantially linear line of substantially constant thickness at the central meridian M-M, the thickness of the lens in the proximal regions above and below the central meridian M-M are also substantially linear. This is illustrated for example by linear line of substantially constant thickness C-C above the central meridian M-M, and linear line of substantially constant thickness D-D below the central meridian.

At locations beyond the proximal regions above and below the central meridian M-M, the lines of substantially constant thickness are curvilinear, such as lines A-A and B-B. These are similar to those described with reference to Figure 2. The proximal regions may cover between about 50% to 100% of the central optic zone 6, for example 50%, 60%, 70%, 80% or 90% of the central optic zone 6.

Referring to Figure 5B, some of the lines of substantially constant thickness include a piecemeal form in the proximal regions described above, covering between about 50% to 100% of the central optic zone 6. Referring, for example, to line E-E in the proximal region above the central meridian M-M, the line has a substantially linear section 521 at locations proximal to the central optic zone 6, followed by a deviation section 523 at locations proximal to the outer peripheral zone 4. The deviation section may, for example be characterised as curvilinear shape or substantially linear. Similarly, line F-F, located at a proximal region below the central meridian M-M, has a substantially linear section 525 followed by a deviation section 527. Overall, the lines E-E and F-F may still more closely follow the shape of an eye-lid, when at rest and/or during blinking in comparison to linear lines of constant thickness. In still further embodiments, the upper and lower regions of the lens, outside of the optic zone 6 may also be characterised by lines of substantially constant thickness in piecemeal form.

At locations beyond the proximal regions above and below the central meridian M-M, the lines of substantially constant thickness are curvilinear, such as lines A-A and B-B. The line of substantially constant thickness at the central meridian M-M is substantially linear. These lines A-A, B-B, and M-M are similar to those described above with reference to Figure 2.

It will be understood that further alternative embodiments to those described in the foregoing description may be formed. For example, the location of the boundaries between the zones may be changed, the shapes of the zones may be varied from generally circular/annular and the thickness profile with curvilinear lines of constant thickness may extend through the outer peripheral zone 4 as well as the inner peripheral zone 5 (in which case the lens may include a narrow transition zone, for example between about 0.2 to 0.5 mm to the edge 3). In some embodiments, in particular hard contact lenses, the outer peripheral zone 4 may be omitted. If the outer peripheral zone 4 is omitted, the lens may include a narrow transition zone 12 to the edge 3 at the outer extremity of the inner peripheral zone 5. In certain embodiments, the curvilinear thickness profile may be provided in one region of the lens and not another. For example, the curvilinear lines of constant thickness may be provided on the lens across the area that the upper eye-lid travels. For the area across which the lower eye-lid travels a different approach may be used, for example the substantially linear lines of constant thickness. Similarly, a portion of the upper and lower hemispheres may be provided with the curvilinear lines of constant thickness described herein and the remainder include a different thickness profile. For example about 20%, about 25%, about 30%, about 35% or about 40% of the upper and/or lower hemispheres may include the curvilinear lines of constant thickness. The portion(s) with curvilinear lines of constant thickness may be provided toward the upper and lower edges of the lens (when the lens is in the desired orientation).

In addition, for some recipients/recipient groups, the effective pivot axis may not fall at the vertical centre of the lens, but below or above the drawn horizontal axis. In this case the axis of rotation D shown in Figure 3 may be correspondingly shifted, with a resultant shift upwards or downwards of the central meridian M-M. Still further, for particular recipients/recipient groups the effective pivot axis may not be not perpendicular to the central axis of the lens, i.e. the pivot point on the left side of the lens has a different location from the one on the right side. In these variations the lens would become asymmetric and left and right handed versions may have to be manufactured and stocked. To aid in identification the left and right lenses may be marked, for example through different colour tinting or placing distinguishing indicia near the edge of one or both of the lenses.

It will also be understood that the embodiments disclosed and defined in this specification extends to all alternative combinations of two or more of the individual features mentioned or evident from the text or drawings. All of these different combinations constitute various alternative aspects of the invention.

## Claims

1. A contact lens (100, 200) comprising:
an anterior surface (1);
a posterior surface (2);
an edge (3) joining the anterior and posterior surfaces (1, 2);
the anterior and posterior surfaces (1, 2) forming a central optic zone (6) and a peripheral zone (4, 5) outside the central optic zone (6);
the peripheral zone (4, 5) having a thickness profile with a varying thickness for providing rotational force to tend to rotationally orient the contact lens (100, 200) in a target orientation, the thickness profile including substantially curvilinear lines (A-A, B-B) of substantially constant thickness that, when the lens (100, 200) is in the target orientation, extend generally horizontally across the lens (100, 200), **characterized in that**
said lines of constant thickness (A-A, B-B) are located substantially along the intersection of a plane (C) at different angles of rotation and the anterior and/or posterior surface (1, 2) of the contact lens (300), the plane (C) having a substantially fixed axis of rotation (D) posterior to the lens (300).

2. The contact lens (100, 200, 300) of claim 1, further comprising an outer peripheral zone (4) extending between the peripheral zone (5) and the edge (3), the outer peripheral zone (4) having a thickness profile that smoothly transitions between the outer extremity of the peripheral zone (4) and the edge (3).

3. The contact lens (100, 200, 300) of claim 1 or claim 2 comprising a transition zone (10) of between 0.2 to 0.5 mm between the central optic zone (6) and the peripheral zone (8), the transition zone (10) having a thickness profile that smoothly transitions between the outer extremity of the central optic zone (6) the peripheral zone (8).

4. The contact lens (100, 200, 300) of any one of claims 1 to 3, wherein on at least one of the anterior and posterior surfaces (1, 2) the central optic zone (6) is circular and the peripheral zone (4, 5) is annular.

5. The contact lens (100, 200, 300) of any one of claims 1 to 4, wherein the central optic zone comprises optics for correction of astigmatism.

6. The contact lens (100, 200, 300) of any one of claims 1 to 5, wherein the thickness profile provides a prism ballast type lens.

7. The contact lens (100, 200, 300) of any one of claims 1 to 5, wherein the thickness profile provides a double slab-off type lens.

8. The contact lens (100, 200, 300) of any one of claims 1 to 7 formed substantially from a soft transparent material.

9. A method of manufacturing a contact lens (100, 200, 300), especially according to one of the claims 1 to 8, having a contact lens body with an anterior surface (1), a posterior surface (2) and an edge (3) joining the anterior and posterior surfaces (1, 2), the anterior and posterior surfaces (1, 2) forming a central optic zone (6) and a peripheral zone (4, 5) outside the central optic zone (6).

10. Method according to claim 9, wherein the method further comprises defining a thickness profile that varies between the anterior surface (1) and the posterior surface (2), the thickness profile:
adapted to provide a rotational force on the contact lens (100, 200, 300) that tends to orient the contact lens (100, 200, 300) in a target rotational orientation when applied to a recipient eye, and including non-linear lines of constant thickness (A-A, B-B) that, when the lens (100, 200, 300) is in the target orientation, extend generally horizontally across the lens (100, 200, 300) and more closely match the contact lines of the margins of at least one of the eyelids of the recipient with the contact lens (100, 200, 300) in comparison to linear lines across the substantially same horizontal meridian (M-M) of the lens (100, 200, 300), wherein said lines of constant thickness (A-A, B-B) are located substantially along the intersection of a plane (C) at different angles of rotation and the anterior and/or posterior surface (1, 2) of the contact lens (100, 200, 300), the plane (C) having a substantially fixed axis of rotation (D) posterior to the lens (100, 200, 300).

11. The method of claim 9 or 10, wherein the recipient eye is a nominal eye selected based on data from a population, sub-population or group of eyes.

12. The method of any one of claims 9 to 11, further comprising:
defining at least a central optic zone (6) and a peripheral zone (4,5) outside the central optic zone (6); and
providing said thickness profile in the peripheral zone (4, 5) and not the central optic zone (6).

13. The method of claim 12, further comprising:
defining an outer peripheral zone (4) about the peripheral zone (5), the outer peripheral zone (4) extending to the edge (3); and
defining a thickness profile in the outer peripheral zone (4) that provides a smooth transition in thickness between the outer extremity of the peripheral zone (4) and the edge (3).

14. The method of one of the claims 9 to 13, further comprising forming a transition zone (10) between the central optic zone (6) and the peripheral zone (5), the transition zone (12) providing a smooth transition of thickness between the central optic zone (6) and the peripheral zone (5).

## Patentansprüche

1. Kontaktlinse (100, 200), umfassend:
eine vordere Fläche (1);
eine hintere Fläche (2);
einen Rand (3), der die vordere und hintere Fläche (1, 2) verbindet;
wobei die vordere und hintere Fläche (1, 2) einen zentralen optischen Bereich (6) und einen peripheren Bereich (4, 5) außerhalb des zentralen optischen Bereichs (6) ausbilden;
wobei der periphere Bereich (4, 5) ein Dickenprofil mit unterschiedlicher Dicke aufweist, um eine Rotationskraft bereitzustellen, die tendenziell die Kontaktlinse (100, 200) in eine Zielausrichtung dreht, wobei das Dickenprofil im Wesentlichen gekrümmte Linien (A-A, B-B) mit im Wesentlichen konstanter Dicke umfasst, die sich, wenn die Linse (100, 200) sich in der Zielausrichtung befindet, im Allgemeinen horizontal über die Linse (100, 200) hinweg erstrecken, **dadurch gekennzeichnet, dass**
die Linien mit konstanter Dicke (A-A, B-B) sich im Wesentlichen entlang der Schnittstelle einer Ebene (C) unter verschiedenen Drehwinkeln und der vorderen und/oder hinteren Fläche (1, 2) der Kontaktlinse (300) befinden, wobei die Ebene (C) eine im Wesentlichen feste Drehachse (D) hinter der Linse (300) aufweist.

2. Kontaktlinse (100, 200, 300) nach Anspruch 1, ferner umfassend einen äußeren peripheren Bereich (4), der sich zwischen dem peripheren Bereich (5) und dem Rand (3) erstreckt, wobei der äußere periphere Bereich (4) ein Dickenprofil aufweist, das fließend zwischen dem äußeren Ende des peripheren Bereichs (4) und dem Rand (3) übergeht.

3. Kontaktlinse (100, 200, 300) nach Anspruch 1 oder Anspruch 2, umfassend einen Übergangsbereich (10) von zwischen 0,2 bis 0,5 mm zwischen dem zentralen optischen Bereich (6) und dem peripheren Bereich (8), wobei der Übergangsbereich (10) ein Dickenprofil aufweist, das fließend zwischen dem äußeren Ende des zentralen optischen Bereichs (6) und dem peripheren Bereich (8) übergeht.

4. Kontaktlinse (100, 200, 300) nach einem der Ansprüche 1 bis 3, wobei auf mindestens einer der vorderen und hinteren Fläche (1, 2) der zentrale optische Bereich (6) kreisförmig und der periphere Bereich (4, 5) ringförmig ist.

5. Kontaktlinse (100, 200, 300) nach einem der Ansprüche 1 bis 4, wobei der zentrale optische Bereich eine Optik zur Korrektur von Astigmatismus umfasst.

6. Kontaktlinse (100, 200, 300) nach einem der Ansprüche 1 bis 5, wobei das Dickenprofil eine Linse mit Prismenballast bereitstellt.

7. Kontaktlinse (100, 200, 300) nach einem der Ansprüche 1 bis 5, wobei das Dickenprofil eine Linse mit doppeltem Slab-Off bereitstellt.

8. Kontaktlinse (100, 200, 300) nach einem der Ansprüche 1 bis 7, die im Wesentlichen aus einem weichen, transparenten Material ausgebildet ist.

9. Verfahren zur Herstellung einer Kontaktlinse (100, 200, 300), insbesondere nach einem der Ansprüche 1 bis 8, aufweisend einen Kontaktlinsenkörper mit einer vorderen Fläche (1), einer hinteren Fläche (2) und einem Rand (3), der die vordere und hintere Fläche (1, 2) verbindet, wobei die vordere und hintere Fläche (1, 2) einen zentralen optische Bereich (6) und einen peripheren Bereich (4, 5) außerhalb des zentralen optischen Bereichs ausbilden.

10. Verfahren nach Anspruch 9, wobei das Verfahren ferner ein Definieren eines Dickenprofils umfasst, das zwischen der vorderen Fläche (1) und der hinteren Fläche (2) unterschiedlich ist, wobei das Dickenprofil:
dazu ausgelegt ist, eine auf die Kontaktlinse (100, 200, 300) wirkende Rotationskraft zu erzeugen, die die Kontaktlinse (100, 200, 300) tendenziell in eine Zielrotationsausrichtung bringt, wenn sie auf ein Auge eines Empfängers aufgebracht wird, und nichtlineare Linien mit konstanter Dicke (A-A, B-B) umfasst, die sich, wenn die Linse (100, 200, 300) sich in der Zielausrichtung befindet, im Allgemeinen horizontal über die Linse (100, 200, 300) hinweg erstrecken und die Kontaktlinien der Randbereiche mindestens eines der Augenlider des Empfängers im Vergleich zu linearen Linien über den im Wesentlichen gleichen horizontalen Meridian (M-M) der Linse (100, 200, 300) hinweg besser mit der Kontaktlinse (100, 200, 300) in Übereinstimmung bringen, wobei die Linien mit konstanter Dicke (A-A, B-B) sich im Wesentlichen entlang der Schnittstelle einer Ebene (C) unter verschiedenen Drehwinkeln und der vorderen und/oder hinteren Fläche (1, 2) der Kontaktlinse (100, 200, 300) befinden, wobei die Ebene (C) eine im Wesentlichen feste Drehachse (D) hinter der Linse (100, 200, 300) aufweist.

11. Verfahren nach Anspruch 9 oder 10, wobei es sich bei dem Auge des Empfängers um ein nominales Auge handelt, das auf der Grundlage von Daten aus einer Population, einer Teilpopulation oder einer Gruppe von Augen ausgewählt ist.

12. Verfahren nach einem der Ansprüche 9 bis 11, ferner umfassend:
Definieren mindestens eines zentralen optischen Bereichs (6) und eines peripheren Bereichs (4, 5) außerhalb des zentralen optischen Bereichs (6); und
Bereitstellen des Dickenprofils in dem peripheren Bereich (4, 5) und nicht in dem zentralen optischen Bereich (6).

13. Verfahren nach Anspruch 12, ferner umfassend:
Definieren eines äußeren peripheren Bereichs (4) um den peripheren Bereich (5) herum, wobei sich der äußere periphere Bereich (4) bis zu dem Rand (3) erstreckt; und
Definieren eines Dickenprofils in dem äußeren peripheren Bereich (4), das einen fließenden Übergang der Dicke zwischen dem äußeren Ende des peripheren Bereichs (4) und dem Rand (3) bereitstellt.

14. Verfahren nach einem der Ansprüche 9 bis 13, ferner umfassend ein Ausbilden eines Übergangsbereichs (10) zwischen dem zentralen optischen Bereich (6) und dem peripheren Bereich (5), wobei der Übergangsbereich (12) einen fließenden Übergang der Dicke zwischen dem zentralen optischen Bereich (6) und dem peripheren Bereich (5) bereitstellt.

## Revendications

1. Lentille de contact (100, 200) comprenant :
une surface antérieure (1) ;
une surface postérieure (2) ;
un bord (3) joignant les surfaces antérieure et postérieure (1, 2) ;
les surfaces antérieure et postérieure (1, 2) formant une zone optique centrale (6) et une zone périphérique (4, 5) en dehors de la zone optique centrale (6) ;
la zone périphérique (4, 5) ayant un profil d'épaisseur à épaisseur variable pour produire une force de rotation qui tend à orienter par rotation la lentille de contact (100, 200) dans une orientation cible, le profil d'épaisseur comprenant des lignes essentiellement curvilignes (A-A, B-B) d'une épaisseur essentiellement constante qui, quand la lentille (100, 200) est dans l'orientation cible, se prolongent généralement horizontalement à travers la lentille (100, 200), **caractérisée en ce que**
lesdites lignes d'une épaisseur constante (A-A, B-B) sont essentiellement situées le long de l'intersection entre un plan (C) à différents angles de rotation et la surface antérieure et/ou postérieure (1, 2) de la lentille de contact (300), le plan (C) ayant un axe de rotation (D) essentiellement fixe postérieur à la lentille (300).

2. Lentille de contact (100, 200, 300) de la revendication 1, comprenant en outre une zone périphérique externe (4) qui se prolonge entre la zone périphérique (5) et le bord (3), la zone périphérique externe (4) ayant un profil d'épaisseur à transition régulière entre l'extrémité externe de la zone périphérique (4) et le bord (3).

3. Lentille de contact (100, 200, 300) de la revendication 1 ou de la revendication 2 comprenant une zone de transition (10) d'entre 0,2 à 0,5 mm entre la zone optique centrale (6) et la zone périphérique (8), la zone de transition (10) ayant un profil d'épaisseur à transition régulière entre l'extrémité externe de la zone optique centrale (6) et la zone périphérique (8).

4. Lentille de contact (100, 200, 300) de l'une quelconque des revendications 1 à 3 où, sur au moins une des surfaces antérieure et postérieure (1, 2), la zone optique centrale (6) est circulaire et la zone périphérique (4, 5) est annulaire.

5. Lentille de contact (100, 200, 300) de l'une quelconque des revendications 1 à 4, où la zone optique centrale comprend un système optique pour correction de l'astigmatisme.

6. Lentille de contact (100, 200, 300) de l'une quelconque des revendications 1 à 5, où le profil d'épaisseur produit une lentille du type à ballast prismastique.

7. Lentille de contact (100, 200, 300) de l'une quelconque des revendications 1 à 5, où le profil d'épaisseur produit une lentille du type à double prisme de compensation verticale.

8. Lentille de contact (100, 200, 300) de l'une quelconque des revendications 1 à 7 essentiellement formée à partir d'un matériau transparent souple.

9. Procédé de fabrication d'une lentille de contact (100, 200, 300), particulièrement selon l'une des revendications 1 à 8, ayant un corps de lentille de contact qui présente une surface antérieure (1), une surface postérieure (2) et un bord (3) joignant les surfaces antérieure et postérieure (1, 2), les surfaces antérieure et postérieure (1, 2) formant une zone optique centrale (6) et une zone périphérique (4, 5) en dehors de la zone optique centrale (6).

10. Procédé selon la revendication 9, le procédé comprenant en outre la définition d'un profil d'épaisseur qui varie entre la surface antérieure (1) et la surface postérieure (2), le profil d'épaisseur :
étant conçu pour produire une force de rotation sur la lentille de contact (100, 200, 300) qui qui tend à orienter par rotation la lentille de contact (100, 200, 300) dans une orientation cible à l'application sur un oeil receveur et incluant des lignes non linéaires d'une épaisseur constante (A-A, B-B) qui, quand la lentille (100, 200, 300) est dans l'orientation cible, se prolongent généralement horizontalement à travers la lentille (100, 200, 300) et qui, par comparaison à des lignes linéaires qui traversent essentiellement le même méridien horizontal (M-M) de la lentille (100, 200, 300), coïncident plus étroitement avec les lignes de contact des bords d'au moins une des paupières du receveur de la lentille de contact (100, 200, 300), lesdites lignes d'une épaisseur constante (A-A, B-B) étant essentiellement situées le long de l'intersection entre un plan (C) à différents angles de rotation et la surface antérieure et/ou postérieure (1, 2) de la lentille de contact (100, 200, 300), le plan (C) ayant un axe de rotation (D) essentiellement fixe postérieur à la lentille (100, 200, 300).

11. Procédé de la revendication 9 ou 10, où l'oeil receveur est un oeil nominal sélectionné sur la base de données obtenues dans une population, une sous-population ou un groupe d'yeux.

12. Procédé de l'une quelconque des revendications 9 à 11, qui comprend en outre :
la définition d'au moins une zone optique centrale (6) et d'une zone périphérique (4, 5) en dehors de la zone optique centrale (6) ; et
la production dudit profil d'épaisseur dans la zone périphérique (4, 5) et non dans la zone optique centrale (6).

13. Procédé de la revendication 12, comprenant en outre :
la définition d'une zone périphérique externe (4) autour la zone périphérique (5), la zone périphérique externe (4) se prolongeant jusqu'au bord (3) ; et
la définition d'un profil d'épaisseur dans la zone périphérique externe (4) qui produit une transition régulière de l'épaisseur entre l'extrémité externe de la zone périphérique (4) et le bord (3).

14. Procédé de l'une des revendications 9 à 13, comprenant en outre la formation d'une zone de transition (10) entre la zone optique centrale (6) et la zone périphérique (5), la zone de transition (12) produisant une transition régulière de l'épaisseur entre la zone optique centrale (6) et la zone périphérique (5).
